Europäisches Patentamt

European Patent Office

Office européen des brevets

(11) Veröffentlichungsnummer: **0 480 128 A1**

## (12) EUROPÄISCHE PATENTANMELDUNG

(21) Anmeldenummer: **91109864.8**

(22) Anmeldetag: **17.06.91**

(51) Int. Cl.5: **B64F 1/00**

(30) Priorität: **11.10.90 DE 4032224**

(43) Veröffentlichungstag der Anmeldung:
**15.04.92 Patentblatt 92/16**

(84) Benannte Vertragsstaaten:
**AT BE CH DE DK ES FR GB IT LI NL SE**

(71) Anmelder: **TELEFUNKEN SYSTEMTECHNIK GMBH**
**Sedanstrasse 10**
**W-7900 Ulm (Donau)(DE)**

(72) Erfinder: **Schiefenhövel, Günther**
**Barmstedter Strasse 26**
**W-2201 Ellerhoop(DE)**

(74) Vertreter: **Salhoff, Roland, Dipl.-Ing. et al**
**TELEFUNKEN SYSTEMTECHNIK GMBH**
**Postfach 17 30**
**W-7900 Ulm (Donau)(DE)**

(54) **Verfahren zum Führen, Anhalten und Abstellen eines Flugzeuges an einem vorbestimmten Haltepunkt.**

(57) Verfahren zum Führen, Anhalten und Abstellen eines Flugzeuges an einem vorausbestimmten Haltepunkt eines Flugzeugstand- und Abstellplatzes, insbesondere eines seitlich von einer Fluggastbrücke befindlichen, zum Andocken des Flugzeuges an die Fahrgastbrücke vorgesehenen Platzes. Es wird ein Führungssystem verwendet, das eine das Vorbeirollen oder Heranrollen des Flugzeuges abtastende Gebereinheit und eine Anzeigeeinheit aufweist, wobei die Anzeigeeinheit dem Piloten des Flugzeuges die Länge der bis zum Haltepunkt verbleibenden Strecke und das Erreichen des Haltepunktes bekanntgibt, Durch die Elemente der Gebereinheit werden während der Bewegung des Flugzeuges zum Haltepunkt oder vom Haltepunkt weg die Annäherungen bzw. die Entfernungen und seitlichen Abweichungen des Flugzeuges von einer vorgegebenen Leitlinie meßtechnisch erfaßt. Die Ausgangsignale der Gebereinheit werden einem Rechner zugeführt, mit dem die Annäherungen bzw. Entfernungen und die seitlichen Abweichungen des Flugzeuges von der Leitlinie errechnet und den Piloten hieraus abgeleitete Informationen für erforderliche Lenk- und Fahrbewegungen auf der Anzeigeeinrichtung angezeigt werden.

FIG.1
Anordnungsvorschlag für Sensoren bei Geradeaus-Fahrt zur Stop-Position

Die Erfindung betrifft ein Verfahren gemäß dem Oberbegriff von Anspruch 1 und eine Gebereinheit sowie eine Einrichtung zur Durchführung des Verfahrens.

Aus der DE 27 43 281 C3 ist ein Führungssystem zum Abstellen von Flugzeugen bekannt, mit dessen Hilfe die Flugzeuge an einem vorausbestimmten Haltepunkt eines Flugzeugstand- und Abstellplatzes angehalten werden können. Bei dem System werden in Gruppen eingeteilte Geberelemte verwendet, die auf oder im vom Flugzeugstirn-Laufrad überrollten Boden angeordnet sind. Nachteiligerweise ist die Feststellung einer seitlichen Abweichung des Flugzeuges von einer definierten Leitlinie nicht möglich. Darüberhinaus ist von Nachteil, daß es nur dem links im Flugzeug sitzenden Piloten möglich ist, das Flugzeug auf einer durch eine Paralaxenanzeige ermittelbaren Linie zu führen.

Der Erfindung liegt daher die Aufgabe zugrunde, ein Verfahren der eingangs genannten Art vorzuschlagen, mit dem auch seitliche Abweichungen des Flugzeuges von einer definierten Leitlinie erfaßt und Informationen für erforderliche Lenkbewegungen derart zur Anzeige gebracht werden, daß die Piloten die Anzeige inhaltsgleich erkennen und auswerten können.

Die Aufgabe wird erfindungsgemäß dadurch gelöst, daß durch die Elemente der Gebereinheit während der Bewegung des Flugzeuges zum Haltepunkt oder vom Haltepunkt weg die Annäherungen bzw. die Enfernungen und seitlichen Abweichungen des Flugzeuges von einer vorgegebenen Leitlinie meßtechnisch erfaßt werden, daß die Signale der Gebereinheit einem Rechner zugeführt werden, mit dem die Annäherungen bzw. Entfernungen und die seitlichen Abweichungen des Flugzeuges von der Leitlinie errechnet werden, und daß die aus den errechneten Annäherungen bzw. Entfernungen und seitlichen Abweichungen abgeleiteten Informationen für erforderliche Lenk- und Fahrbewegungen auf der Anzeigeeinrichtung den Piloten paralaxenfrei angezeigt werden.

Während Ausgestaltungen der Erfindung in den Anprüchen 2 und 3 beschrieben sind, geben die Ansprüche 4 und 5 Gebereinheiten sowie die Ansprüche 6 bis 17 Einrichtungen zur Durchführung des erfindungsgemäßen Verfahrens an.

Das System zur Führung von Flugzeugen auf Rollwegen und auf Abstellpositionen entlang von baulich vorgegebenen oder von der Systemsteuerung errechneten Leitlinien ist gekennzeichnet durch geeignete Erfassungsgeräte oder Sensoren, die Daten der Flugzeugbewegung ermitteln und die ermittelten Daten Auswertegeräten zur Feststellung der augenblicklichen Positionen zur Verfügung stellen. Dieses System weist weiterhin angepaßte Anzeigegeräte auf, die den Piloten in geeigneter Form Informationen für erforderliche Lenk- und Fahrbewegungen mitteilen. Weiterhin ist eine Systemsteuerung vorhanden, die auf rechnerischem Wege aus den Daten, die von den Erfassungsgeräten oder den Sensoren übermittelt werden, die augenblickliche Position des Flugzeuges ermittelt und daraus die erforderlichen Lenk- und Fahrbewegungen errechnet und über Anzeigeräte dem Flugzeugführer mitteilt.

Die Erfassungsgeräte oder Sensoren, die z. B. durch Schaltleisten realisiert werden können, werden im Roll- bzw. Bewegungsbereich des Flugzeugs im oder auf dem Boden angeordnet oder an den Rändern der Rollwege aufgestellt, so daß das Flugzeug darüber hinweg bzw. an diesen vorbei- oder auf diese zurollt. Die Sensoren (z. B. Schaltleisten) können in Form von zwei unabhängig voneinander arbeitenden Schaltkreisen angeordnet werden, die V-förmig (in Form eines Trichters) zur vorgesehenen Leitlinie im Boden eingelassen sind. Diese Anordnung liefert Bewegungsdaten des Flugzeug-Bugrades dergestalt, daß die Position dieses Bugrades durch Auswertung der Zeitdiffernz zwischen der Berührung der zwei V-förmig liegenden Sensoren festgestellt und daraus rechnerisch die Abweichung von der Leitlinie ermittelt und eventuell erforderliche Lenk- oder Fahrbewegungen über das Anzeigegerät dem Flugzeugführer mitgeteilt werden. Die Sensoren liefern Bewegungsdaten des Flugzeuges dergestalt, daß aus den erreichten Positionen und der Zeitdifferenz zwischen dem Erreichen zweier verschiedener Positionen die Geschwindigkeit ermittelt und daraus resultierend der Zeitbedarf bis zum Erreichen einer nächsten, vorausberechneten Position ermittelt werden kann. Hierdurch werden Informationen über erforderliche Lenk- und Fahrbewegungen nahezu unabhängig von der Positionierung der Erfassungsgeräte ermöglicht.

In der Zeichnung ist ein Ausführungsbeispiel nach der Erfindung dargestellt, und zwar zeigen:

Fig. 1    eine Anordnung von Sensoren bei einer Geradeaus-Fahrt eines Flugzeuges bis zur Stop-Position,

Fig. 2    eine Anordnung von Sensoren bei einer Kurvenfahrt eines Flugzeuges, und die

Fig. 3    Anzeigen auf einer Anzeigeneinrichtung für verschiedene bis 8 Positionen eines Flugzeuges bei Erfassung durch Sensoren.

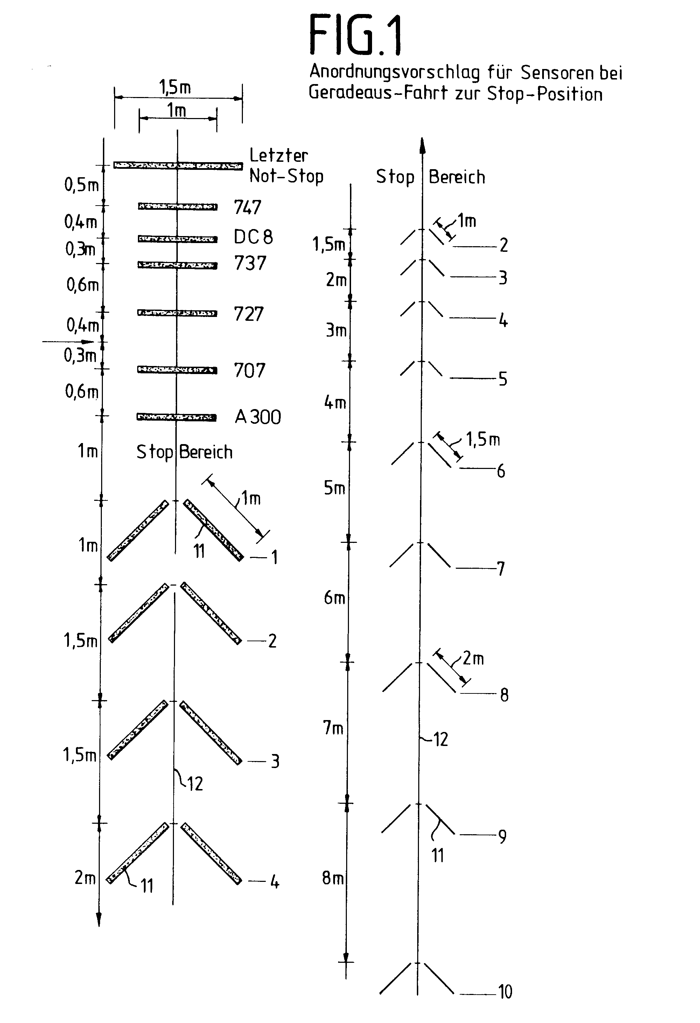

In Fig. 1 sind Sensoren 11 entlang einer Leitlinie 12 angeordnet, wobei der Abstand zwischen den Sensoren 11 in Längsrichtung der Leitlinie 12 umso kleiner wird, je näher die Sensoren 11 dem Stop-Bereich liegen. Abstandsangaben der Sensoren 11 sind seitlich neben der Leitlinie 12 eingezeichnet. Weiterhin sind dargestellt Positionsangaben 1 bis 10 der Sensoren 11, Maßangaben für die Sensoren sowie vorgegebenen Sensoren 11 zugeordnete Flugzeugtyp-Bezeichnungen. Die Anordnung der Sensoren 11 ist V-förmig in Form eines Trichters zur Leitlinie 12. Dieses gilt nicht für den Stop-Bereich der linken Darstellung, in dem die Sensoren 11 senkrecht zur Leitlinie 12 angeordnet sind.

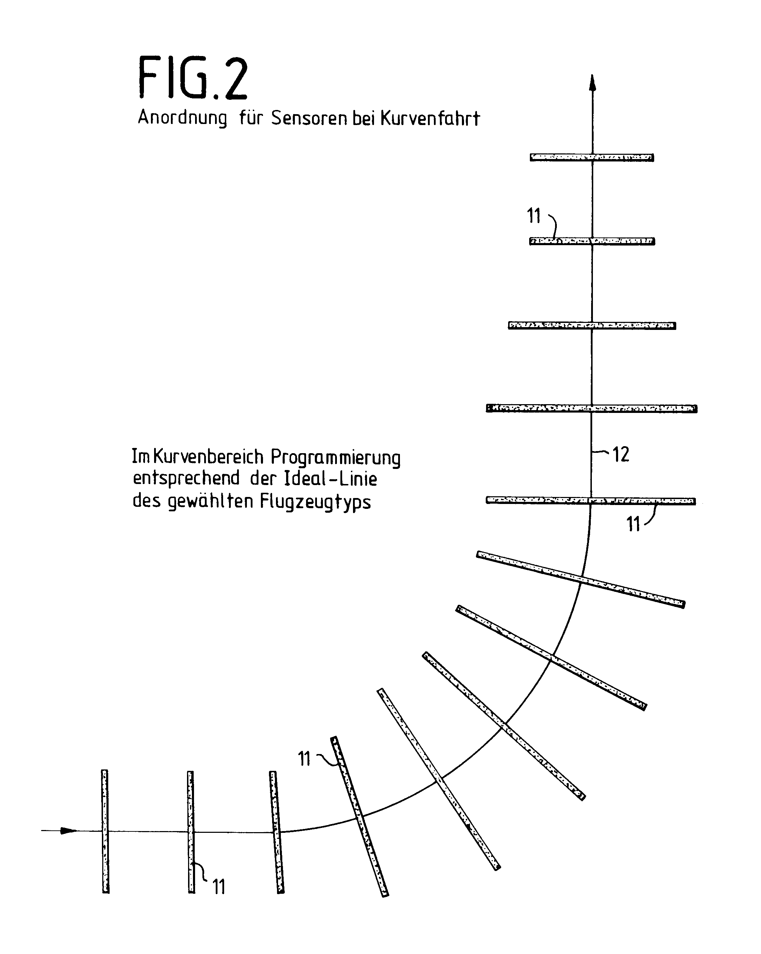

Eine besondere Anordnung von Sensoren 11 für eine Kurve zeigt Fig. 2, wobei die Sensoren 11 jeweils senkrecht zur Leitlinie 12 liegen. Bei den Sensoren 11 gemäß Fig. 1 und 2 kann es sich um Schaltleisten handeln, die aus gummiähnlichem Material hergestellt, sehr abriebfest und gegen alle auf dem Vorfeld bekannten Verschmutzungen resistent (Kerosin, Salz, Hornmehl, etc.) sind. Die Schaltleisten sind in Ausnehmungen im Roll- bzw. Bewegungsbereich des Flugzeuges im Boden, über die ein Flugzeug hinwegrollt, oder an den Rollwegen im Bewegungsbereich des Flugzeuges, an denen das Flugzeug vorbeirollt oder auf die das Flugzeug zurollt, angeordnet bzw. aufgestellt.

## 1. Grundidee / Gesamtkonzept

Die neue Anlage wird in ihrem Informationsangebot generell aktive Signale verarbeiten, d. h. Anrollpositionen, StopPositionen des Flugzeuges sowie Abweichungen zur Mittellinie werden durch geeignet angeordnete Erfassungsgeräte festgestellt und durch eine entsprechend programmierte Steuerung dem Piloten über eine Anzeigetafel die Parkhilfen gegeben.

Die Hinweise auf Abweichungen zur Mittellinie lassen eine Wertung zwischen "geringen" und "starken" Abweichungen zu, um ein übersteuern zu vermeiden.

Hierdurch ist das System auch besonders gut bei Kurvenfahrten einsetzbar (vgl. Fig. 2).

Die Erfassungsgeräte lassen sich auch in einer Art anordnen, daß verschiedene, dem jeweiligen Flugzeugtyp zugeordnete Leitlinien ausgewählt werden können.

Unabhängig von der Anzahl der Leitlinien und der Leitlinienführung reicht pro Flugzeugstand eine Anzeigetafel, welche unabhängig von der Leitlinie an gut einsehbarer Stelle installiert wird.

Zur Vermeidung der von anderen Systemen bekannten Justageprobleme erzeugen die Erfassungsgeräte digitale Signale, die zweifelsfrei über die augenblickliche Position des Flugzeuges (Bugrad) Auskunft geben.

Die Vorteile gegenüber anderen vorbekannten Anlagen sind somit:
- Saubere (digitale) Signale (keine Justageprobleme)
- Anordnung in Kurven möglich
- Information über geringe und starke Abweichungen von der Leitlinie

- Positionierung der Anzeigetafel ist frei wählbar
- Das System ist auch für den Co-Piloten nutzbar
- Durch entsprechende Auslegung der Sensoren kann je nach Flugzeugtyp eine andere Leitlinie gewählt werden.

## 2. Technische Details

Für die drei Hauptkomponenten (Erfassungsgeräte, Betriebsrechner und Anzeigetafel) sind folgende Ausführungsformen vorgesehen, wobei bei den Erfassungsgeräten alternativ Sensoren und Lasersysteme vorgestellt werden.

## 2.1 Erfassungsgeräte

## 2.11 Sensoren

Die Sensorsignale der Sensoren 11 und deren zeitliches Eintreffen erlauben, die Position des Bugrades eines Flugzeuges in Relation zur Leitlinie und zum Haltepunkt eindeutig festzulegen.

Die Länge der einzelnen Sensoren wird so gewählt, daß ein sicheres Einfädeln des Flugzeuges auf die Leitlinie ermöglicht wird. In Kurvenbereichen bzw. bei parallelen Leitlinien wird die Anordnung der Sensoren den aktuellen Gegebenheiten angepaßt. Sowohl die Anzahl als auch die Länge der einzelnen Sensorfelder ist frei wählbar. Bei den Sensoren 11 gemäß Fig. 1 und 2 sind diese komplett vergossen und im Boden verschraub- oder verklebbar angeordnet. Die eingearbeiteten Sensoren geben bei Betätigung ein digitales Signal mit einem Abschlußwiderstand im k-Ohm Bereich.

Durch Prüfleitungen kann die Anlage ständig überwacht werden - sowohl Kurzschluß als auch Aderbruch bzw. erhöhte Übergangswiderstände führen zur Fehlermeldung.

Die Sensor-Signale werden über herkömmliches Telefonkabel (6-paarig, 0,6 mm dia) an den Betriebsrechner gegeben. Der Anschluß im Sensorbereich erfolgt über Muffen oder Steckverbindungen.

## 2.12 Lasersystem

Als Lasersystem zur Erfassung der Flugzeugannäherung wird ein 3-Kanal-Laser eingesetzt, der im Bereich des Anzeigegerätes installiert wird, z. B. an einer Gebäudewand oder einem Mast. Dieser Installationsort wird gewählt, da der optische Weg zwischen Flugzeug-Cockpit und Anzeigegerät in jedem Falle frei sein wird. Das Lasersystem ist augensicher und hat eine Erfassungstiefe von bis zu 100 m. Der Schwenkbereich des Lasers ist so programmiert, daß sowohl Geradeausfahrten als auch Kurvenfahrten verfolgt und gesteuert werden können.

Das Lasersystem vermißt die Flugzeugnase. Durch Vergleich der Laufzeiten der drei Laserstrahlen wird rechnerisch die Lage der Flugzeugnase in Relation zur Leitlinie und Halteposition ermittelt und daraus abgeleitet digitale Signale zur Weiterverarbeitung durch den Betriebsrechner erzeugt.

## 2.2 Betriebsrechner

Der Betriebsrechner empfängt die digitalen Signale aus den Erfassungsgeräten und bereitet diese zur Anzeige auf der Anzeigetafel auf.

Weiterhin werden über eine Bedienerschnittstelle der aktuelle Flugzeugtyp bzw. andere Betriebsdaten eingegeben, die ebenfalls zur Anzeige an der Anzeigetafel aufbereitet werden.

Der Betriebsrechner kann diese Betriebsdaten auch über eine geeignete Schnittstelle von einem übergeordneten Rechner beziehen und im Gegenzug an diesen Rechner Betriebsdaten weitergeben.

Der Betriebsrechner wird in einem wettergeschützten Gehäuse in der Nähe der Flugzeugposition installiert. Über eine Datenleitung wird die Anzeigetafel angesteuert. Fernbedientableaus und Sensoren werden über normale Telefonkabel angeschlossen.

## 2.3 Anzeigetafel

Zur Anwendung kommt eine Anzeigetafel in LCD-Technik.

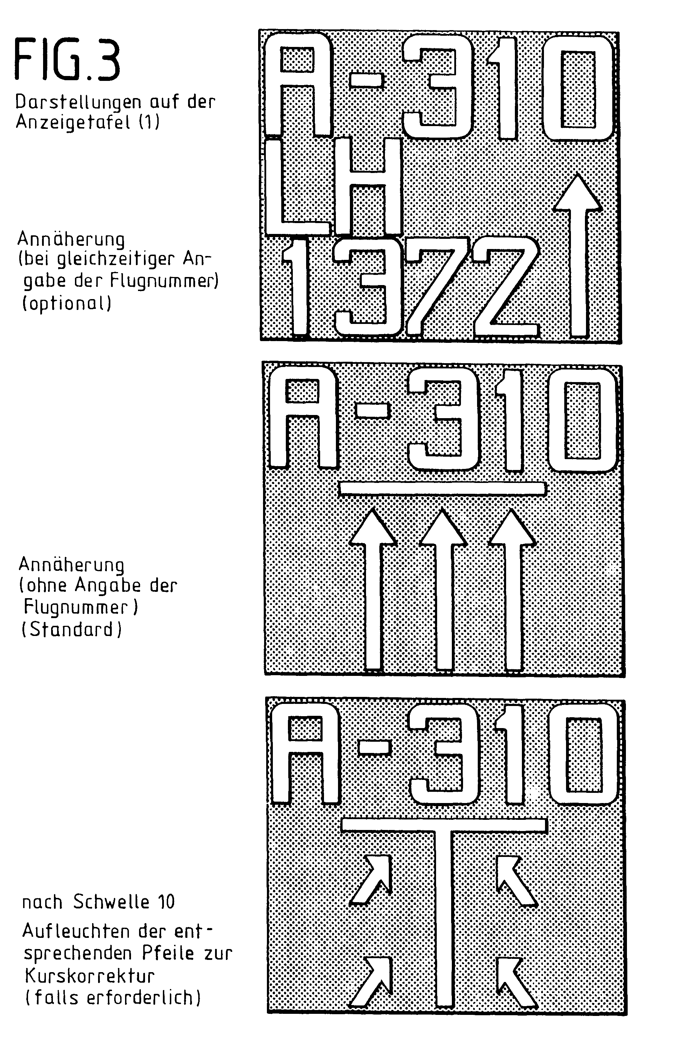

Wie aus den Figuren 3 bis 8 ersichtlich ist, erlaubt die Anzeigetafel neben der Angabe des Flugzeugtyps auch die Angabe der Flugnummer, um bei Bereitstellung zweier benachbarter Parkpositionen Mißverständnisse zu vermeiden. Weiterhin kann das System auch zur Übertragung anderer Text- oder Zahleninformationen an Flugzeugführer oder Bodenpersonal genutzt werden.

Im Falle des Parkvorgangs ist der Informationsablauf wie folgt:
Das Anzeigegerät auf der gewählten Parkposition zeigt in der obersten Zeile den Flugzeugtyp an.

Sofern auch die Flugnummer angezeigt werden soll, erscheint diese in den zwei unteren Zeilen. Das System signalisiert damit die Verfügbarkeit der Anlage.

Sofern die Flugnummer nicht angezeigt werden soll, wird in den unteren Zeilen ein Haltebalken und die Leitlinie dargestellt (Fig. 3).

Wenn das Flugzeug den Bereich der Erfassungsgeräte erreicht, wird im Falle der Anzeige der Flugnummer diese entfernt und durch Haltebalken und Leitlinie ersetzt.

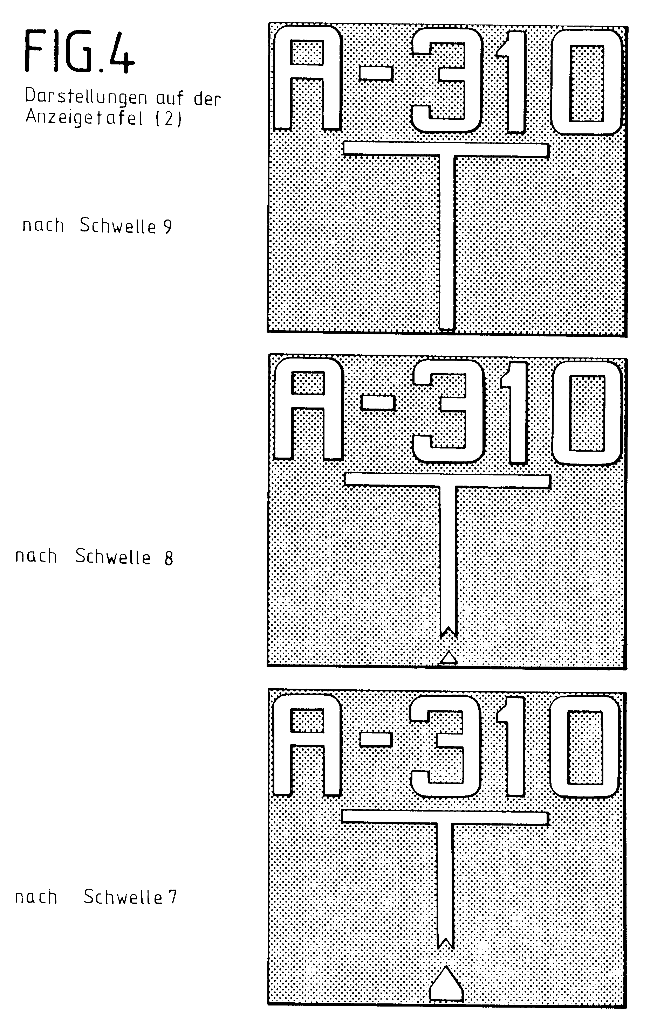

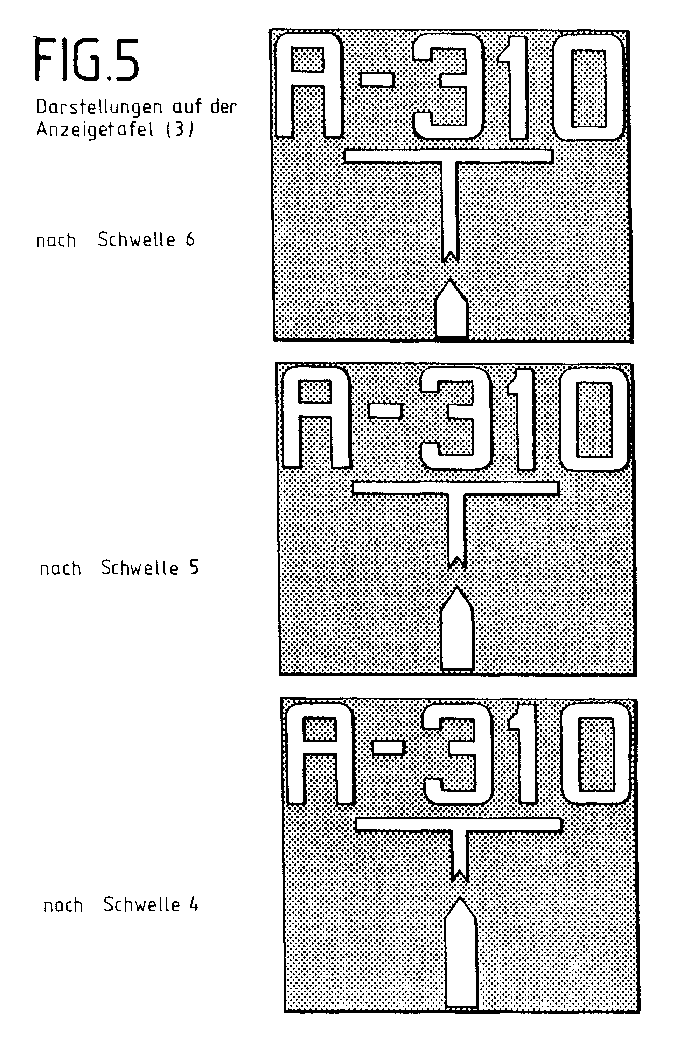

Die Annäherung des Flugzeugs an die Halteposition wird durch entsprechende Signale entlang des Leitlinienbalkens signalisiert (vgl. Fig. 4 und 5).

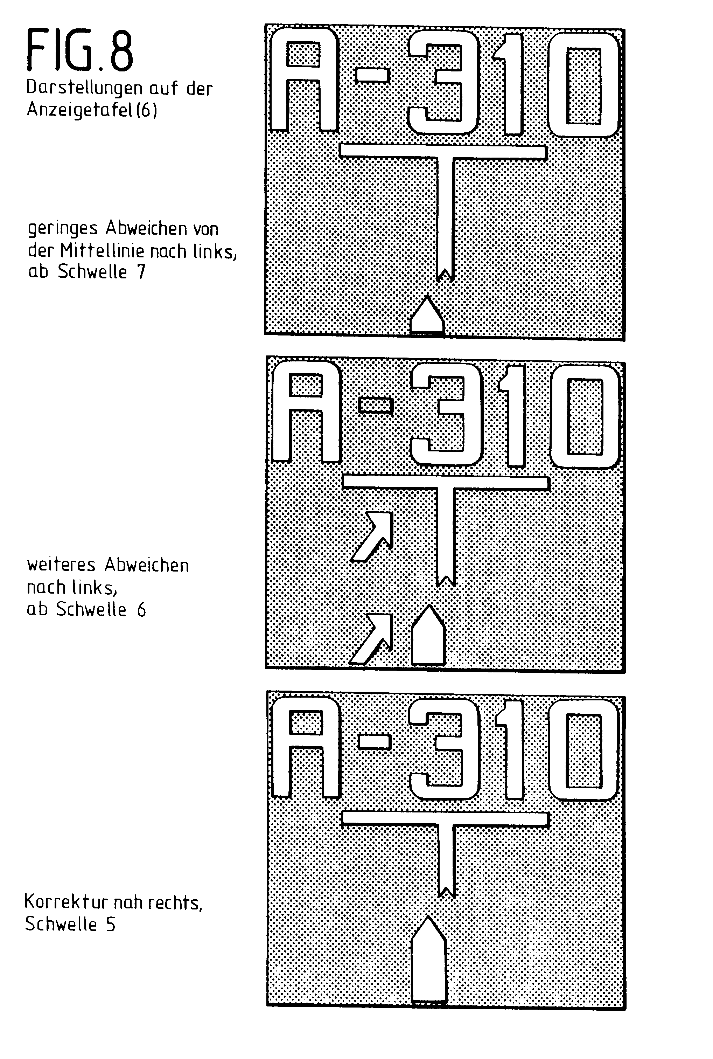

Dabei wird ein Verlassen der Mittelinie durch ein Verschieben des Annäherungssignals zu der entsprechenden Seite angezeigt. Zusätzlich zu der Verschiebung des Annäherungssignals geben Pfeile die Richtung der erforderlichen Lenkkorrektur an (Fig. 8).

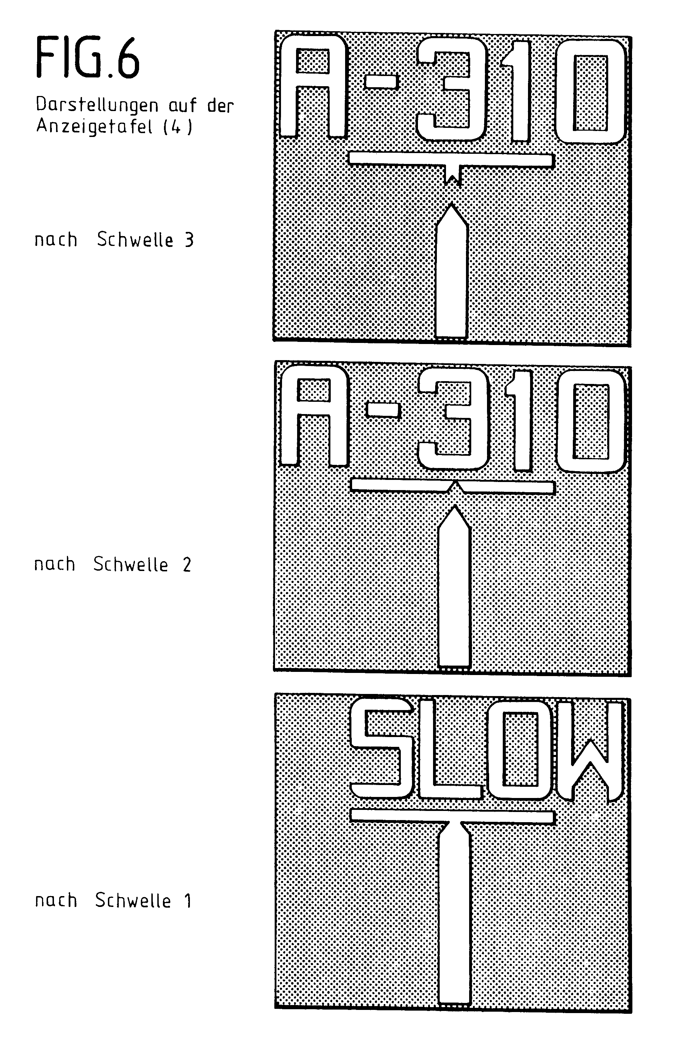

Kurz vor Erreichen des Haltepunktes in der obersten Zeile kann anstelle des Flugzeugtyps der Schriftzug SLOW angezeigt werden (Fig. 6 e).

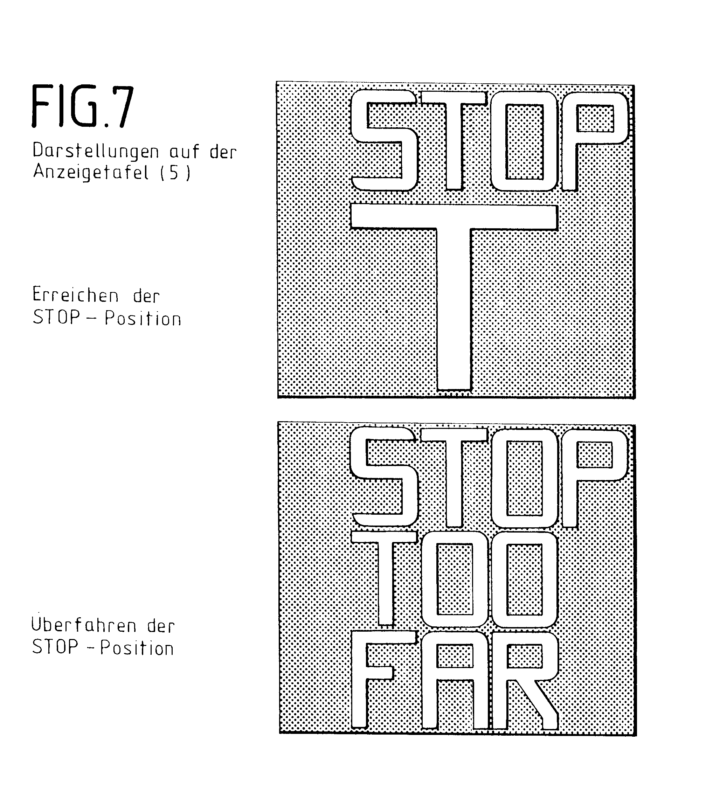

Bei Erreichen des Haltepunktes wird in der obersten Zeile der Schriftzug STOP angezeigt (Fig. 7 a).

Bei Überfahren des Haltepunktes wird in den unteren zwei Zeilen der Schriftzug TOO FAR angezeigt (Fig. 7 b).

Nach einer einstellbaren Zeit von ca. 60 sec. schaltet das System ab und steht für die Weitergabe anderer Informationen zur Verfügung.

Wenn das Flugzeug die Position verläßt wird das System wieder freigeschaltet.

## Patentansprüche

1. Verfahren zum Führen, Anhalten und Abstellen eines Flugzeuges an einem vorausbestimmten Haltepunkt eines Flugzeugstand- und Abstellplatzes, insbesondere eines seitlich von einer Fluggastbrücke befindlichen, zum Andocken des Flugzeuges an die Fluggastbrücke vorgesehen Platzes unter Verwendung eines Führungssystems, das eine das Vorbei- oder Heranrollen des Flugzeuges abtastende Gebereinheit und eine Anzeigeeinheit aufweist, wobei die Anzeigeeinheit dem Piloten des Flugzeuges die Länge der bis zum Haltepunkt verbleibenden Strecke und das Erreichen des Haltepunktes bekanntgibt, dadurch gekennzeichnet, daß durch die Elemente der Gebereinheit während der Bewegung des Flugzeuges zum Haltepunkt oder vom Haltepunkt weg die Annäherungen bzw. die Entfernungen und seitlichen Abweichungen des Flugzeuges von einer vorgegebenen Leitlinie meßtechnisch erfaßt werden, daß die Signale der Gebereinheit einem Rechner zugeführt werden, mit dem die Annäherungen bzw. Entfernungen und die seitlichen Abweichungen des Flugzeuges von der Leitlinie errechnet werden, und daß die aus den errechneten Annäherungen bzw. Entfernungen und seitlichen Abweichungen abgeleiteten Informationen für erforderliche Lenk- und Fahrbewegungen auf der Anzeigeeinrichtung den Piloten paralaxenfrei angezeigt werden.

2. Verfahren nach Anspruch 1, gekennzeichnet durch eine kontinuierliche Ermittlung der Annäherungen bzw. Entfernungen und der seitlichen Abweichungen.

3. Verfahren nach Anspruch 1, dadurch gekennzeichnet, daß durch die Elemente der Gebereinheit digitale Ausgangssignale erzeugt werden.

4. Gebereinheit zur Durchführung des Verfahrens nach Anspruch 1, 2 oder 3, wobei die Geberelemente in vorgegebenen Abständen auf oder im Boden angeordnet sind, dadurch gekennzeichnet, daß im Rollbereich des Flugzeuges die von einem Laufrad des Flugzeuges überrollten Geberelemente voneinander unterschiedliche Abstände aufweisen, und daß jedes Geberelement die augenblickliche Position für den gewählten Flugzeugtyp festlegt und nach Auswertung durch den Rechner den Piloten auf der Anzeigeeinrichtung die Informationen für erforderliche Lenk- und Fahrbewegungen angezeigt werden.

5. Gebereinheit zur Durchführung des Verfahrens nach Anspruch 1, 2 oder 3 oder nach Anspruch 4, dadurch gekennzeichnet, daß die Elemente der Gebereinheit entlang einer bogenförmigen Leitlinie auf oder im Boden zur Führung des Flugzeuges bei einer Kurvenfahrt angeordnet sind.

6. Einrichtung zur Durchführung des Verfahrens nach Anspruch 1, 2 oder 3, dadurch gekennzeichnet, daß als Elemente der Gebereinheit aktive Ortungssysteme vorgesehen sind.

7. Einrichtung nach Anspruch 6, gekennzeichnet durch die Verwendung von radarelektronischen Systemen.

8. Einrichtung nach Anspruch 6, gekennzeichnet durch die Verwendung von laseroptischen Systemen.

9. Einrichtung nach Anspruch 6, gekennzeichnet durch sonarelektronische Systeme.

10. Einrichtung nach Anspruch 6, gekennzeichnet duch die Verwendung eines Global-Position-Systems (GPS-Systems).

11. Einrichtung zur Durchführung des Verfahrens nach Anspruch 1, 2 oder 3, dadurch gekennzeichnet, daß als Elemente der Gebereinheit passive Ortungssysteme vorgesehen sind.

12. Einrichtung nach Anspruch 11, gekennzeichnet durch die Verwendung von optischen Ortungssystemen.

13. Einrichtung nach Anspruch 11, gekennzeichnet durch die Verwendung von optoelektronischen Ortungssystemen.

14. Einrichtung nach Anspruch 11, gekennzeichnet durch die Verwendung von Schaltleisten.

15. Einrichtung nach Anspruch 14, dadurch gekennzeichnet, daß die Schaltleisten im Roll- bzw. Bewegungsbereich des Flugzeuges im Boden angeordnet sind, über die ein Flugzeug hinwegrollt.

16. Einrichtung nach Anspruch 14, dadurch gekennzeichnet, daß die Schaltleisten im Roll- oder Bewegungsbereich des Flugzeuges auf die Oberfläche aufgebracht sind, über die ein Flugzeug hinwegrollt.

17. Einrichtung nach Anspruch 15, 16 oder 17, dadurch gekennzeichnet, daß die Schaltleisten V-förmig in Form eines Trichters zur vorgesehenen Leitlinie angeordnet sind.

# FIG.1

Anordnungsvorschlag für Sensoren bei
Geradeaus-Fahrt zur Stop-Position

1,5m
1m

0,5m
Letzter
Not-Stop

0,4m
747

0,3m
DC 8

737

0,6m

727

0,4m

0,3m
707

0,6m

A 300

1m
Stop | Bereich

1m

1m
11
1

1,5m
2

12

1,5m
3

2m
11
4

Stop | Bereich

1,5m
1m
2

2m
3

3m
4

5

4m

1,5m
6

5m

7

6m

2m
8

7m
12

9
11

8m

10

# FIG.2

Anordnung für Sensoren bei Kurvenfahrt

Im Kurvenbereich Programmierung
entsprechend der Ideal-Linie
des gewählten Flugzeugtyps

11

12

11

11

11

# FIG.3

Darstellungen auf der
Anzeigetafel (1)

Annäherung
(bei gleichzeitiger Angabe der Flugnummer)
(optional)

Annäherung
(ohne Angabe der
Flugnummer)
(Standard)

nach Schwelle 10

Aufleuchten der entsprechenden Pfeile zur
Kurskorrektur
(falls erforderlich)

8

# FIG.4
Darstellungen auf der
Anzeigetafel (2)

nach Schwelle 9

nach Schwelle 8

nach Schwelle 7

# FIG.5

Darstellungen auf der
Anzeigetafel (3)

nach   Schwelle 6

nach   Schwelle 5

nach   Schwelle 4

# FIG.6

Darstellungen auf der
Anzeigetafel (4)

nach Schwelle 3

nach Schwelle 2

nach Schwelle 1

# FIG.7

Darstellungen auf der
Anzeigetafel (5)

Erreichen der
STOP – Position

Überfahren der
STOP – Position

# FIG.8
Darstellungen auf der
Anzeigetafel(6)

geringes Abweichen von
der Mittellinie nach links,
ab Schwelle 7

weiteres Abweichen
nach links,
ab Schwelle 6

Korrektur nah rechts,
Schwelle 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 134 135   (MANCHESTER CITY COUNCIL) <br> * Seite 8, Zeile 18 - Seite 12, Zeile 7 * * <br> – – – | 1-6,14-17 | B 64 F 1/00 |
| X | FR-A-2 007 336   (AMERICAN CHAIN & CABLE COMPANY) <br> * Seite 2, Zeile 33 - Seite 3, Zeile 15 * * <br> – – – | 1,2,4,5,11 | |
| A | US-A-3 124 690   (SAVIN) <br> * Spalte 2, Zeile 67 - Spalte 3, Zeile 27 * * <br> – – – | 1,6 | |
| A | US-A-3 662 977   (SHANNON) <br> * Spalte 2, Zeile 20 - Zeile 34 * * <br> – – – | 1,11 | |
| A | FR-A-1 298 041   (E.W. BLISS COMPANY) <br> * das ganze Dokument * * <br> – – – – – | 1 | |

RECHERCHIERTE SACHGEBIETE (Int. Cl.5)

B 64 F

Der vorliegende Recherchenbericht wurde für alle Patentansprüche erstellt

| Recherchenort | Abschlußdatum der Recherche | Prüfer |
|---|---|---|
| Den Haag | 13 Januar 92 | HAUGLUSTAINE H.P.M. |